Europäisches Patentamt

European Patent Office

Office européen des brevets

(19)

(11) Veröffentlichungsnummer : **0 071 046**
**B1**

(12) **EUROPÄISCHE PATENTSCHRIFT**

(45) Veröffentlichungstag der Patentschriff :
16.04.86

(51) Int. Cl.⁴ : **H 05 B  6/10, B 60 H  1/14**

(21) Anmeldenummer : 82106014.2

(22) Anmeldetag : 06.07.82

(54) **Flüssigkeitsgekühlter Heizgenerator.**

(30) Priorität : 29.07.81 DE 3129817

(43) Veröffentlichungstag der Anmeldung :
09.02.83 Patentblatt 83/06

(45) Bekanntmachung des Hinweises auf die Patenterteilung : 16.04.86 Patentblatt 86/16

(84) Benannte Vertragsstaaten :
DE FR GB SE

(56) Entgegenhaltungen :
EP-A- 0 062 706
FR-A- 1 567 344
FR-A- 2 290 073
US-A- 2 549 362
US-A- 3 668 419
**Bödefeld/Sequenz, Elektrische Maschinen, 8.**
**Auflage, Springer Verlag, Wien (1971), Seiten 194,195**

(73) Patentinhaber : **ROBERT BOSCH GMBH**
**Postfach 50**
**D-7000 Stuttgart 1 (DE)**

(72) Erfinder : **Ahner, Peter, Dipl.-Ing.**
**Wiesenstrasse 25**
**D-7140 Ludwigsburg (DE)**
Erfinder : **Härer, Helmut, Dr.-Ing.**
**Obere Weinbergstrasse 22**
**D-7148 Remseck 1 (DE)**
Erfinder : **Schustek, Siegfried, Dr.-Ing.**
**Adlerstrasse 21**
**D-7997 Immenstaad (DE)**

## Beschreibung

Die Erfindung betrifft einen nach dem Induktionsprinzip arbeitenden Heizgenerator für Fahrzeuge gemäß Oberbegriff von Anspruch 1, wie er aus der US-A-3 668 419 bekanntgeworden ist. Diese Druckschrift zeigt zwei Generatoren mit zwei auf einer gemeinsamen Welle angeordneten Läufern, wobei ein Generator als herkömmlicher Generator und der zweite Generator als Heizgenerator ausgebildet ist.

Aus Bödefeld/Sequenz, Elektrische Maschinen, 8. Auflage, Springer Verlag Wien, 1971, Seiten 194 bis 195 sind Käfigwicklungen für Kurzschlußläufer von elektrischen Motoren bekannt. Hierbei besteht der Läuferkäfig aus Aluminiumstäben, welche durch einteilig angeformte Kurzschlußringe, ebenfalls aus Aluminium, verbunden sind. Hinweise auf eine entsprechende Ausgestaltung der Ständerwicklung eines läufergespeisten Heizgenerators für Fahrzeuge enthält die Druckschrift nicht.

Der Erfindung liegt die Aufgabe zugrunde, einen nach dem Induktionsprinzip arbeitenden Heizgenerator für Fahrzeuge zu schaffen, welcher bei großer Effizienz mit relativ geringem Aufwand hergestellt werden kann. Hierzu ist erfindungsgemäß vorgesehen, daß ein feststehender geblechter Ständer von einem umlaufenden Wechsel-Magnetfeld durchsetzt wird und Anker-Stäbe enthält, welche stirnseitig durch metallische Kurzschlußringe beiderseits des Ständerblechpaketes verbunden sind und entweder von einem flüssigen Wärmeträger durchflossen werden oder bei geringer Länge massiv ausgebildet sind.

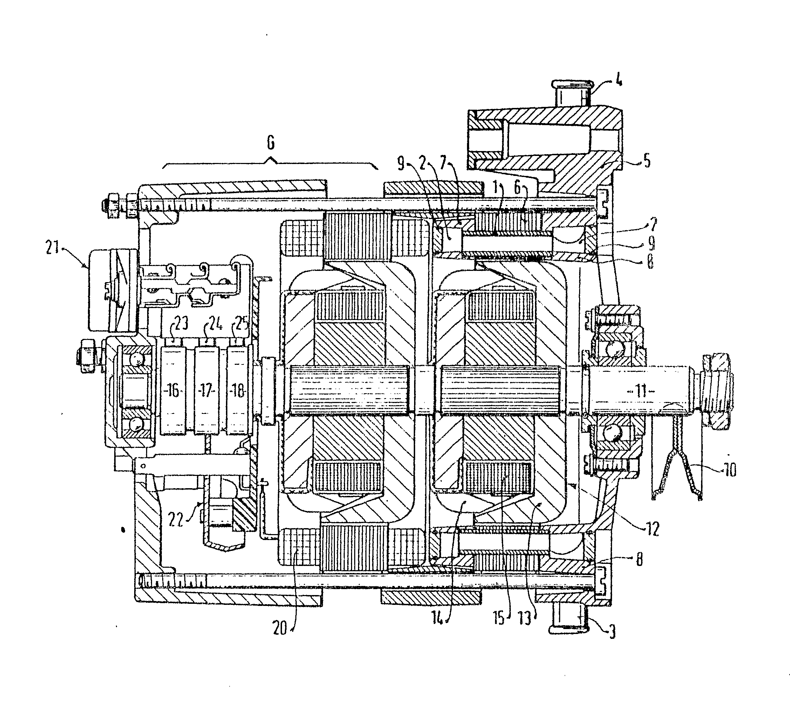

In der Zeichnung ist im Längsschnitt ein flüssigkeitsgekühlter Heizgenerator wiedergegeben, welcher mit einem üblichen Bordnetzgenerator G kombiniert ist. Die achsparallelen Anker-Stäbe 1 im lamellierten Ständer 6 sind als Rohre ausgebildet, die über Kanäle 2 in den stirnseitigen Kurzschlußringen 7, 8 miteinander mäanderförmig verbunden oder zueinander parallel geschaltet sind. Das als Kühlmittel vorgesehene Fluid, z. B. Öl oder Wasser wird über den Zulauf 3 und den Rücklauf 4 geführt, wobei Zulauf 3 und Rücklauf 4 sich auf der Antriebslagerseite 5 befinden.

Beim dargestellten Ausführungsbeispiel werden relativ hochohmige Rohr-Leiter, die im Strangpreßverfahren hergestellt werden können, beiderseits des Ständerblechpaketes durch die angespritzten metallische Kurzschlußringe 7, 8, die gleichzeitig als Sammelkanäle 2 ausgebildet sind, miteinander verbunden. Die Sammelkanäle lassen sich durch eingelegte Ringe verschließen. Die Abdichtung kann durch eingelegte Dichtungsringe 9, durch Schweißen, Löten oder Kleben erfolgen. Bei entsprechenden Abmessungen ist auch eine Herstellung der Rohrleiter im Druckgußverfahren möglich. Bei diesen Ständerausführungen läßt sich neben einer günstigen Widerstandsfestlegung für den interessierenden Betriebsbereich auch noch zusammen mit Stromverdrängungserscheinungen eine gewisse Selbstbegrenzung der Heizleistung bei höheren Drehzahlen erzielen.

Beim dargestellten Ausführungsbeispiel eines erfindungsgemäßen Heizgenerators sitzt auf einer auch für den Bordnetzgenerator G gemeinsamen, durch eine Riemenscheibe 10 antreibbare Rotorwelle 11 ein zusätzlicher Klauenpolrad 12, welches in Umfangsrichtung fingerförmige Klauenpolpaare 13,14 aufweist. Die Magnetisierung der Klauenpole erfolgt durch eine Gleichstrom-Erregerwicklung 15, welche an zwei der drei Schleifringe 16, 17, 18 geführt ist, welche von der Drehstrom-Wicklung 20 über einen Gleichrichter 22 in Brücken- und Bürstenschaltung 23, 24, 25 mit Spannung versorgt werden. Die Heizleistung des Heizgenerators kann durch einen Regler 21 über einen nicht dargestellten Sollwertgeber und ein ebenfalls nicht dargestelltes Meßglied durch Verändern der Erregerleistung beeinflußt werden. Ein Bezug der Erregerleistung aus der Batterie des Fahrzeuges ist auch denkbar.

## Patentansprüche

1. Nach dem Induktionsprinzip arbeitender Heizgenerator für Fahrzeuge, insbesondere für das Führerhaus bzw. den Fahrgastraum eines Fahrzeuges, mit einem geblechten Ständerring (6), der mit abwechselnder Polarität von einem Magnetfeld eines vom Ständerring (6) umschlossenen Polrades (12) durchsetzt wird, dadurch gekennzeichnet, daß der Ständerring (6) mehrere in Umfangsrichtung verteilt angeordnete Anker-Stäbe (1) enthält, welche als Rohre ausgebildet sind und stirnseitig durch metallische Kurzschlußringe (7, 8) beiderseits des Ständerringes (6) verbunden sind und von einem flüssigen Wärmeträger durchflossen werden.

2. Generator nach Anspruch 1, dadurch gekennzeichnet, daß die Kurzschlußringe (7, 8) in Umfangsrichtung verlaufende Führungskanäle (2) enthalten, die mit einem ein Lagerschild (5) durchsetzenden Vorlauf (3) und Rücklauf (4) für ein als Wärmeträger dienendes, flüssiges Kühlmittel verbunden sind.

3. Nach dem Induktionsprinzip arbeitender Heizgenerator für Fahrzeuge, insbesondere für das Führerhaus bzw. den Fahrgastraum eines Fahrzeuges, mit einem geblechten Ständerring (6), der mit abwechselnder Polarität von einem Magnetfeld eines vom Ständerring umschlossenen Polrads (12) durchsetzt wird, dadurch gekennzeichnet, daß der Ständerring (6) mehrere in Umfangsrichtung verteilt angeordnete Anker-Stäbe (1) enthält, welche stirnseitig durch metallische Kurzschlußringe (7, 8) beiderseits des Ständerringes (6) verbunden sind, wobei die Anker-Stäbe (1) bei geringer Länge massiv sind und die Wärme durch Wärmeleitung über das Leitermaterial selbst an die Kurzschlußringe abgeführt wird.

4. Generator nach einem der Ansprüche 1 bis 3, dadurch gekennzeichnet, daß die stirnseitigen Kurzschlußringe (7, 8) angespritzt sind.

5. Generator nach Anspruch 1 oder 2, dadurch gekennzeichnet, daß die stirnseitigen Kurzschlußringe (7, 8) eingelegte Dichtungsringe (9) tragen.

6. Generator nach einem der Ansprüche 1 bis 5, dadurch gekennzeichnet, daß das Polrad (12) des Heizgenerators auf einer gemeinsamen Antriebsachse (11) mit einem Bordnetzgenerator (G) sitzt, welcher die Gleichstrom-Erregung für die Erregerwicklung (15) des Polrades (12) des Heizgenerators liefert.

## Claims

1. Heating generator operating on the induction principle for vehicles, in particular for the driver's cab or the passenger compartment of a vehicle, with a laminated stator frame (6) which is permeated by a magnetic field of alternating polarity of a magnet wheel (12) surrounded by the stator frame (6), characterised in that the stator frame (6) contains several armature bars (1) which are arranged distributed in the circumferential direction, are designed as tubes and are connected at the ends by metallic short-circuiting rings (7, 8) on either side of the stator frame (6) and through which a liquid heat-transfer medium flows.

2. Generator according to Claim 1, characterised in that the short-circuiting rings (7, 8) contain guide channels (2) which run in the circumferential direction and are connected to a feed (3) and return (4), passed through by a bearing bracket (5), for a liquid coolant serving as heat-transfer medium.

3. Heating generator operating on the induction principle for vehicles, in particular for the driver's cab or the passenger compartment of a vehicle, with a laminated stator frame (6) which is permeated by a magnetic field of alternating polarity of a magnet wheel (12) surrounded by the stator frame (6), characterised in that the stator frame (6) contains several armature bars (1) which are arranged distributed in the circumferential direction and are connected at the ends by metallic short-circuiting rings (7, 8) on either side of the stator frame (6), the armature bars (1) being solid and short in length and the heat being dissipated to the short-circuiting rings by thermal conduction via the conductor material itself.

4. Generator according to one of Claims 1 to 3, characterised in that the short-circuiting rings (7, 8) at the ends are sprayed-on.

5. Generator according to Claim 1 or 2, characterised in that the short-circuiting rings (7, 8) at the ends bear inserted sealing rings (9).

6. Generator according to one of Claims 1 to 5, characterised in that the magnet wheel (12) of the heating generator is seated on a common drive axle (11) with an on-board generator (G) which supplies the d.c. excitation for the exciter winding (15) of the magnet wheel (12) of the heating generator.

## Revendications

1. Générateur de chauffage pour véhicules automobiles, en particulier pour la cabine du conducteur ou l'habitacle d'un véhicule automobile, fonctionnant selon le principe d'induction, ayant un anneau de stator en tôle (6) qui est traversé par un champ magnétique à polarité alternative d'une roue polaire (12) renfermée dans l'anneau du stator (6), caractérisé par le fait que l'anneau du stator (6) contient plusieurs barres d'induit (1) disposées en étant réparties en direction de la périphérie, qui ont la configuration de tubes et sont assemblées vers l'avant par des anneaux de court-circuit métalliques (7, 8) des deux côtés de l'anneau de stator (6) et qui sont traversées par un caloporteur liquide.

2. Générateur selon la revendication 1, caractérisé par le fait que les anneaux de court-circuit (7, 8) contiennent des conduits (2) se dirigeant vers la périphérie qui sont raccordés à une arrivée (3) traversant une flasque (5) et à un retour (4) pour un réfrigérant liquide servant de caloporteur.

3. Générateur de chauffage pour véhicules automobiles, en particulier pour la cabine du conducteur ou l'habitacle d'un véhicule automobile, fonctionnant selon le principe d'induction, ayant un anneau de stator en tôle (6) qui est traversé par un champ magnétique à polarité alternative d'une roue polaire (12) renfermée dans l'anneau du stator, caractérisé par le fait que l'anneau du stator (6) contient plusieurs barres d'induit (1) disposées en étant réparties en direction de la périphérie, qui sont assemblées vers l'avant par des anneaux de court-circuit métalliques (7, 8) des deux côtés de l'anneau du stator (6), les barres d'induit (1) étant d'un seul bloc dans le cas de longueur faible et la chaleur étant amenée aux anneaux de court-circuit par conduction par l'intermédiaire du matériau conducteur lui-même.

4. Générateur selon l'une des revendications 1 à 3, caractérisé par le fait que les anneaux de court-circuit situés en avant (7, 8) sont moulés par injection.

5. Générateur selon la revendication 1 ou 2, caractérisé par le fait que les anneaux de court-circuit situés en avant (7, 8) portent des joints d'étanchéité insérés (9).

6. Générateur selon l'une des revendications 1 à 5, caractérisé par le fait que la roue polaire (12) du générateur de chauffage est montée sur un arbre d'entraînement (11) commun avec une génératrice d'alimentation du réseau de bord (G), qui délivre l'excitation à courant continu pour la bobine d'excitation (15) de la roue polaire (12) du générateur de chauffage.